# EUROPEAN PATENT APPLICATION

(11) **EP 0 722 997 A2**
(43) Date of publication of application: **24.07.1996**
(21) Application number: 96100289.6
(22) Date of filing: 10.01.1996
(51) Int. Cl.: C09K 5/06

(54) **Heat storage composition**

(30) Priority: 11.01.1995 JP 18372/95; 14.11.1995 JP 318450/95
(71) Applicant: Nikken Fine Chemicals Co., Ltd., Tokyo (JP); NIKKEN CHEMICALS CO., LTD., Tokyo (JP)
(72) Inventor: Kohno, Hiroyuki, Takara Kitagashira Hights, Nagoya-shi, Aichi-ken (JP); Maruyama, Shin-ichi, Gamagohri-shi, Aichi-ken (JP); Yasaki, Hirokazu, Ianazawa-shi, Aichi-ken (JP); Uraji, Tatsuya, Nagoya-shi, Aichi-ken (JP)
(74) Representative: VOSSIUS & PARTNER

(57) **Abstract**

Disclosed is a heat storage composition consisting essentially of erythritol and containing a stabilizer for erythritol which comprises a silicic acid compound and/or a di-valent or tri-valent inorganic compound and optionally an erythritol-phobic substance. Using the composition, it is possible to store and to utilize power supply during night, solar energy, industrial exhaust heat, etc. effectively.

## Description

The present invention relates to a heat storage composition (heat storage material) and, more precisely, to a heat storage composition with improved stability which consists essentially of erythritol and contains a heat stabilizer. Using the heat storage composition, it is possible to effectively utilize power supply during night (midnight power), solar energy, industrial exhaust heat, etc.

A heat storage material is grouped into a latent heat storage material and a sensible heat storage material. The former can accumulate a larger quantity of heat energy than the latter, without being accompanied by the increase in its temperature within the temperature range around its melting point. For this reason, the use of the former essentially for planning a small-volume heat accumulator has been investigated, by which the heat to be regenerated is at constant temperatures.

Since the first oil crisis, studies on the utilization of heat storage materials have been made actively in Japan from the viewpoint of energy-saving, and numerous study reports and patent applications relating to heat storage materials have been made and filed.

As typical heat storage materials, mentioned are hydrates of inorganic salts, such as magnesium chloride 6-hydrate as disclosed in Japanese Patent Laid-Open No. 51-128053, magnesium nitrate 6-hydrate as disclosed in Japanese Patent Laid-Open No. 51-126980, barium hydroxide 8-hydrate and calcium chloride 6-hydrate as disclosed in Japanese Patent Laid-Open No. 51-70193, etc. ; and hydrates of salts of organic acids such as sodium formate 3-hydrate as disclosed in Japanese Patent Laid-Open No. 57-145173, etc.

However, these salt hydrates are problematic in their practical use in that they are accompanied by phase separation and supercooling phenomenon after having been repeatedly subjected to the melting/solidification cycle. In addition, since these significantly corrode apparatus made of metal, etc., it is difficult to select corrosion-resistant materials suitable for containers for them. On the other hand, containers made of such corrosion-resistant materials, if used, are problematic in that they cause the increase in their costs.

Many organic heat storage materials, especially paraffinic ones have been developed, as they poorly corrode apparatus. However, these are problematic in that they have a small heat of fusion of not more than 50 cal/g and have a low melting point of not higher than 80°C and that pure paraffins are high-priced. If low-purity and low-priced ones are used, their melting-point ranges are broadened. In addition, these have another drawback in that they are seriously deteriorated after having been used repeatedly. Moreover, as being combustible, they are unfavorable from the viewpoint of fire prevention.

Apart from the above-mentioned materials, dimethyl terephthalate, dimethyl fumarate and dihydroanthracene having a melting point of not lower than 100°C have been reported useful as high-melting-point organic heat-accumulating materials in Japanese Patent Laid-Open No. 56-79174. However, as having a quantity of latent heat for fusion of not more than 55 cal/g, these are not still satisfactory.

Of organic compounds, sugar alcohols have a large quantity of latent heat for fusion and are relatively stable, but none of these has heretofore been put to practical use in heat accumulators.

Japanese Patent Laid-Open No. 54-65864 discloses the use of xylitol, which is one of sugar alcohols, in heat accumulators. However, since this is noticeably supercooled and has poor heat stability, the single use of the compound by itself is not practicable. Japanese Patent Laid-Open No. Hyo 63-500946 refers to the use of sugar alcohols in heat accumulators but this has no concrete description demonstrating their use in heat accumulators. Japanese Patent Laid-Open No. Hei 5-32963 mentions a relatively stable heat storage composition consisting essentially of a sugar alcohol such as erythritol or the like.

In order to develop truly practicable heat storage materials, it is indispensable to establish the technique for making the materials stable to heat and for preventing the materials from being supercooled.

It is known that sugar alcohols are deteriorated if their melts are used for a long period of time or used repeatedly at temperatures not lower than their melting point. The reasons for such deterioration are considered because sugar alcohols are oxidized with oxygen in air while being heated, or the resulting decomposates are polymerized or dehydrated, or they are decomposed after having been reacted with the components as liberated from containers due to the deterioration of the containers.

There is no previous report referring to the study on the means of preventing the deterioration of sugar alcohols to be caused by their oxidation with oxygen in air. It is difficult to prevent sugar alcohols from being deteriorated due to their dehydration, and any technique effective for the prevention has not been found as yet. As a general means for preventing the deterioration of sugar alcohols, a method of adding some additives thereto might be employed. However, there is also no previous report referring to this method.

When used in a latent heat storage composition, erythritol is repeatedly melted and crystallized for a long period of time. In the composition, erythritol is needed to be strictly stable in order not to be supercooled or not to be subjected to phase separation during the melting/crystallization cycle.

In general, saccharides become easily decomposed at temperatures not lower than 120°C, and their decomposition is especially promoted in the presence of small amounts of salts, acids, metal ions, etc.

For these reasons, means for preventing and inhibiting the decomposition of substances having a melting point of not lower than 120°C, such as erythritol, and also means for preventing the supercooling of such substances are important.

The above-mentioned Japanese Patent Laid-Open No. Hei 5-32963 has revealed that erythritol was not deteriorated after having been subjected to 250 heating/cooling cycles where the heating was at 130°C and the cooling was at 60°C. Considering their practicability, it is indispensable that heat accumulators containing such erythritol shall not be surely deteriorated for 2 years or more in their practical use, and it is desirable that they are stable even when the operating temperatures for them are somewhat higher than the melting point of erythritol. However, if erythritol is singly used as the heat storage substance in heat accumulators, it is in fact deteriorated at 140°C or higher, as will be demonstrated in the examples mentioned hereinunder. Therefore, the development of more stable heat storage compositions containing erythritol is desired.

Given the situation, the object of the present invention is to solve the above-mentioned problems in the prior art and to provide a more practicable heat storage composition containing erythritol.

When heated at its melting point or higher, erythritol is easily melted while absorbing energy corresponding to the quantity of latent heat of fusion. In this condition, therefore, the thus-melted erythritol can keep itself at temperatures around its melting point. On the other hand, if it is cooled lower than its melting point, it releases energy corresponding to the quantity of heat for crystallization. In this condition, the thus-crystallized erythritol can keep itself also at temperatures around its melting point.

Erythritol thus has such excellent intrinsic physical properties, for example, such a high quantity of latent heat of fusion and a high melting point. In addition, it is safe to human beings since it can be used also in foods and since it is hardly combustible and is not corrosive. Utilizing its properties, therefore, erythritol can be a component in practicable heat accumulators in view of its heat stability, durability and resistance to supercooling.

In order to solve the above problems of the prior art it has been noted that the depolymerization equilibrium of silicic acid hydrates is at pH of from 7 to 8 and also that erythritol is stable in neutral and alkaline condition, and it has been found that the heat stability of erythritol is enhanced by the addition of a silicic acid compound or the like thereto. Especially the addition of a silicic acid compound with good dispersibility, such as silicon dioxide usable as a food additive, is effective also for preventing the supercooling of erythritol, and that when the amount of such a silicic acid compound to be added to erythritol is varied to thereby control the pH value of the resulting erythritol-containing material or when an erythritol-phobic substance is added to the erythritol-containing material, then the stability of erythritol in the resulting material is much more improved.

Specifically, the first aspect of the present invention is a heat storage composition comprising erythritol to which have/has been added a silicic acid compound and/or a di-valent or tri-valent inorganic compound. The second aspect of the present invention is a heat storage composition comprising erythritol to which have/has been added a silicic acid compound and/or a di-valent or tri-valent inorganic compound along with an erythritol-phobic substance.

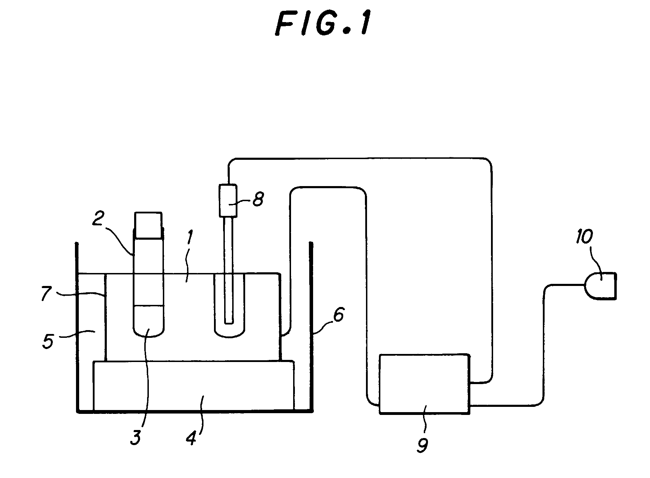

Fig. 1 is a graphic view showing the outline of the apparatus used for the heat stability test in the examples mentioned hereinunder.

The "heat storage composition or heat storage material" as referred to herein is a concept that includes two types of the composition or material, one being for utilizing its latent heat of fusion and the other being for utilizing its heat for crystallization. Specifically, the present invention is based on the finding of the utilizability of the latent heat of fusion of erythritol and that of the heat for crystallization of the same.

Erythritol to be employed in the present invention can be produced, for example, by a fermentation of a raw material of glucose. A commercial product of erythritol sold by Nikken Chemicals Co., Ltd. can be used in the present invention. The thermal analysis of the commercial product of erythritol (product of Nikken Chemicals Co.,Ltd.) with a differential scanning colorimetric analyzer (manufactured by Seiko Electronics Industry Co.) revealed that its latent heat for fusion is 87 cal/g and that its melting point derived from the peak top is 121 °C.

The heat storage composition of the present invention consists essentially of erythritol. The wording "consisting essentially of" as referred to herein means that the heat storage composition of the present invention contains erythritol of an amount necessary for attaining its object. Therefore, any other side components can be added to the composition as far as they meet the object of the present invention.

The silicic acid compound to be added to the composition of the present invention is an additive that functions to enhance the heat stability of erythritol in the composition. Accordingly, by adding the compound to the composition, the heat stability of erythritol therein is enhanced even at temperatures higher than its melting point (121°C) while the supercooling of erythritol is retarded. Accordingly, the practicability of the composition containing the additive is ensured.

The silicic acid compound for use in the present invention includes, for example, aluminosilicates, amorphous silica, etc.

Aluminosilicates may be either those having crystalline structures, such as zeolite, or allophanes of amorphous aluminosilicates such as typically Kanuma clay, or may also be mixtures of these. By adding any of such aluminosilicates to the composition of the present invention, the composition having the intended heat stability can be obtained.

As amorphous silica are employable food additives of silicon dioxide, which include, for example, "Reolosil" (product of Tokuyama Co. ), "Carplex CS-500" (product of Shionogi & Co.), "Sylopute 342" (product of Fuji Devison Co.), and also "Silica Flour" (product of Showa Chemical Industry Co.), "Silton" (product of Showa Chemical Industry Co.), "Fly Ash" (product of Showa Chemical Industry Co.), etc. These can be used singly or as their mixtures.

In addition to these, also employable are dried diatomaceous products such as "Okayama SPF" (product of Showa Chemical Industry Co.), "Ohita SPF" (product of Showa Chemical Industry Co.), "Akita SPF" (product of Showa Chemical Industry Co.), etc., calcined diatomaceous products such as "Okayana #200" (product of Showa Chemical Industry Co.), "Ohita Sparkle Flow" (product of Showa Chemical Industry Co.), "Akita Fine Flow" (product of Showa Chemical Industry Co.), calcined flux products such as "Ohita F(T)" (product of Showa Chemical Industry Co.), "0hita #700" (product of Showa Chemical Industry Co.), "Akita F(A)" (product of Showa Chemical Industry Co.), "lkita #2000" (product of Showa Chemical Industry Co.), etc. These can be used also either singly or as their mixtures optionally along with the above-mentioned products.

According to the present invention, the silicic acid compound can exhibit its effect of improving the heat stability of erythritol even when only a minor amount thereof is added to erythritol. However, in order to stably attain the effect of the compound while making the compound exhibit the additional effect of preventing erythritol from being supercooled, the amount of the silicic acid compound to be added to erythritol shall be from 0.0005% to 10%, preferably from 0.1% to 1% based on the amount of erythritol. If the amount of the silicic acid compound added is less than 0.0005%, it is difficult to make the compound stably exhibit its effect of improving the heat stability of erythritol. On the other hand, however, if it is more than 10%, such a too large amount of the compound added will unfavorably cause the reduction in the unit heat storage capacity that is intrinsic to the heat storage composition.

The di-valent or tri-valent inorganic compound to be in the composition of the present invention also contributes to the improvement in the heat stability of erythritol, like the silicic acid compound mentioned above. As specific examples of the inorganic compound, mentioned are hydroxides, oxides or carbonates of calcium ion, magnesium ion, zinc ion and aluminium ion. Of these, especially preferred are calcium hydroxide, quick lime, magnesium hydroxide, zinc hydroxide, aluminium hydroxide, calcium carbonate. etc.

In order to make the heat storage composition of the present invention always stable to heat, it is desirable to make the composition comprising erythritol and a silicic acid compound and/or a di-valent or tri-valent inorganic compound as added thereto always have a pH of 5 or more, preferably from 6 to 8, in stationary use of the composition as its aqueous 0.5 wt.% solution.

The pH value of the aqueous solution of the heat storage composition in its stationary use as referred to herein is one that is obtained by dissolving in water the composition that has been repeatedly used for its full melting/crystallization cycles followed by measuring the pH value of the resulting aqueous solution. In the present invention, the pH value of the aqueous 0.5 wt.% solution of the composition is employed as the index of the composition.

If the pH value in question is lower than 5, the composition is easily dewatered or decomposed. Even if the pH value is high, such will not be problematic in the viewpoint of maintaining the heat stability of the composition but it is recommended to make the composition not too highly alkaline from the viewpoint of the safety of the composition in its use.

The "erythritol-phobic substance" as referred to herein is a liquid substance that is separated from erythritol without being mixed therewith at any ambient temperature. Its specific gravity is smaller than that of erythritol, and the substance is stable at temperatures at which the composition is used. Specific examples of the substance include paraffin, machine oil, vitamin E, linoleic acid, silicone oil, etc. Any of these can be added to the composition either singly or as their mixtures.

The substance floats on the melt of erythritol at 120°C or higher, while shielding erythritol from air, by which erythritol is prevented from being deteriorated by oxygen in air. In addition, the substance penetrates into the space between the composition and the heat-conductive wall of apparatus that results from the solidification of erythritol thereby preventing the thermal conductivity of the heat storage composition from being lowered.

The erythritol-phobic substance can be added to erythritol or to the composition comprising erythritol and a silicic acid compound and/or a di-valent or tri-valent inorganic compound added thereto.

The amount of the erythritol-phobic substance to be added shall be from 0.01 to 10%, preferably from 0.1 to 2%, based on the amount of erythritol.

The heat storage composition of the present invention may contain other various side components in accordance with the object and the embodiment thereof. For example, side components for improving the nucleation of the composition or those for controlling the melting point and the heat of fusion of the composition at desired values can be added to the composition. Such side components that satisfy the objects include sugar alcohols such as galactitol, mannitol, lactitol, sorbitol, xylitol, maltitol, isomalt (reduced paratinose), etc.; saccharides such as glucose. mannose, galactose, fructose, lactose, etc.; and polyols such as pentaerythritol, etc.

The amount of the side components to be added may be determined within the range that does not detract from the effect of the present invention, in consideration of the object and the embodiment of the composition of the present invention, but, in general, it may be from 1 to 50%. preferably from 10 to 40%.

The heat storage composition of the present invention can be used in various embodiments. For example, the composition is melted by the heat of power supply during night or solar energy or by the exhaust heat derived from various plants, thereby making the composition accumulate the heat, and the thus-accumulated heat is regenerated through heat exchange via a medium such as water, air or the like on the occasion of necessity so as to use the composition as a heat source for heating or warming various matters in various cases, for example, for hot-water supply, drying, air-conditioning, etc., in various uses, for example, in domestic use or use in factory plants, etc., irrespective of the scale for heat supply.

As has been described in detail hereinabove, the present invention has realized the practical use of a heat storage composition consisting essentially of erythritol having a large quantity of latent heat of fusion. The heat storage composition thus provided by the present invention is fire-resistant and is highly safe. According to the present invention, it has become possible to efficiently utilize energy on a level of 100°C, which is important for energy-saving, and it is expected to efficiently utilize power supply during night, solar energy and also the exhaust heat from plants. Therefore, the present invention is expected to be extremely advantageous for energy saving and for the protection of the environment.

Next, the present invention is described more concretely by means of the following examples.

### Example 1:

A silicic acid compound, "Radiolite #2000" (product of Showa Chemical Industry Co.) or "Silica 600H" (product of Chuo Silica Co.) was added to erythritol at a proportion of 1%. Using the apparatus shown in Fig. 1 where 1 is an aluminium block for uniformity of heat, 2 is a testing glass tube as container (with a stopper, having a diameter of 15 mm), 3 is a sample, 4 is an insulating brick, 5 is a glass wool layer for insulation, 6 is an outer container, 7 is a belt heater, 8 is a temperature-controlling thermo-couple (filled with aluminium powder therearound), 9 is a temperature controller and 10 is a power source (100 V).

The resulting composition was kept at a settled temperature of 160°C in a nitrogen atmosphere (in the absence of oxygen) for 10 days, whereupon the heat of fusion of the composition, the melting point thereof and the water content thereof were measured. From these data thus measured, the heat stability of erythritol in each composition was evaluated.

The results are shown in Table 1 below. For reference, the data of the heat of fusion of each composition in air are shown therein.

As is obvious from the data in the table, erythritol was much more stable to heat in a nitrogen atmosphere (in the absence of oxygen) than in air even when no silicic acid was added thereto. However, by adding any of the silicic acid compounds thereto, the heat stability of erythritol was much more enhanced. In addition, it was further confirmed that the heat stability of erythritol in the composition comprising it and any of the silicic acid compounds was much enhanced even in air.

**Table 1**

| Additive | Heat of Fusion (J/g) | Heat of Fusion (J/g)* | Melting Point (°C) | Water Content (%) |
|---|---|---|---|---|
| None | 306.4 | 249.1 | 116.6 | 1.29 |
| None (before heating) | 336.1 | - | 116.3 | 0.18 |
| Radiolite #2000 | 327.5 | 325.1 | 115.7 | 1.34 |
| Silica 600H | 333.5 | 308.5 | 117.1 | 1.20 |

| | | | | |
|---|---|---|---|---|
| * : Heat of fusion in air. | | | | |

### Example 2:

A silicic acid compound, "Silica Gel White" (product of Yoneyama Pharmaceutical Co.), "Radiolite #2000" (product of Showa Chemical Industry Co.) or "Silica 600H" (product of Chuo Silica Co.), or an erythritol-phobic substance, linoleic acid (product of Wako Pure Chemicals Co.), vitamin E (product of Wako Pure Chemicals Co.) or paraffin wax (product of Yoneyama Pharmaceutical Co.) was added to erythritol at a proportion of 1%. Using the apparatus shown in Fig. 1, the resulting composition was kept at a settled temperature of 160 °C in air (in the presence of oxygen) for 10 days, whereupon the heat of fusion of the composition, the melting point thereof and the water content thereof were measured. From these data thus measured, the heat stability of erythritol in each composition was evaluated.

The results are shown in Table 2 below. As is obvious from the data in the table, the heat stability of erythritol was enhanced by the addition of each additive thereto.

Linoleic acid, vitamin E and paraffin wax existed in the upper layer in the respective composition, and it is considered that these shielded erythritol from air in each composition and thus contributed to the improvement in the heat stability of erythritol therein.

It was also confirmed that, though not having the activity to shield erythritol from air, "Silica Gel White", "Radiolite #2000" and "Silica 600H" also contributed to the improvement in the heat stability of erythritol in each blend.

**Table 2**

| Additive | Proportion of Additive (%) | Heat of Fusion (J/g) | Melting Point (°C) | Water Content (%) |
|---|---|---|---|---|
| None | 0 | 249.1 | 109.1 | 3.20 |
| None (before heating) | 0 | 336.1 | 116.3 | 0.18 |
| Linoleic Acid | 1 | 305.1 | 115.6 | 1.45 |
| Vitamin E | 1 | 288.0 | 115.0 | 1.57 |
| Paraffin Wax | 1 | 305.9 | 115.1 | 1.47 |
| Silica Gel White | 1 | 285.4 | 111.8 | 2.84 |
| Radiolite #2000 | 1 | 314.0 | 116.2 | 0.70 |
| Silica 600H | 1 | 308.5 | 114.2 | 1.12 |

### Example 3:

A silicic acid compound, "Zeolite" (product of Tosoh Corp.), "Radiolite #2000" (product of Showa Chemical Industry Co.), "Silica 600H" (product of Chuo Silica Co.), "Silica Flour" (product of Showa Chemical Industry Co.), "Silton" (product of Showa Chemical Industry Co.) or "Fly Ash" (product of Showa Chemical Industry Co.), or a dried product of diatomaceous earth, "Okayama SPF" (product of Showa Chemical Industry Co.), "Ohita SPF" (product of Showa Chemical Industry Co.) or "Akita SPF" (product of Showa Chemical Industry Co.), or a calcined product of diatomaceous earth, "Okayana #200" (product of Showa Chemical Industry Co.), "Ohita Sparkle Flow" (product of Showa Chemical Industry Co.) or "Akita Fine Flow" (product of Showa Chemical Industry Co.), or a calcined product of flux, "Ohita F(T)" (product of Showa Chemical Industry Co.), "Ohita #700" (product of Showa Chemical Industry Co.), "Akita F(A)" (product of Showa Chemical Industry Co.), "Akita #2000" (product of Showa Chemical Industry Co.) or "Kanuma Clay" (product of Maruyoshi Co.) was added to erythritol at a proportion of 1%. Using the apparatus shown in Fig. 1, the resulting composition was kept at a settled temperature of 160°C in air (in the presence of oxygen) for 10 days, whereupon the heat of fusion of the composition, the melting point thereof and the water content thereof were measured. From these data thus measured, the heat stability of erythritol in each composition was evaluated.

The results are shown in Table 3 below. The pH value of each composition was determined by dissolving or suspending 0.1 g of each composition sample in 20 ml of pure water followed by measuring the pH value of the resulting solution or suspension after one minute with a pH meter.

As is obvious from the data in Table 3, the heat stability of erythritol was enhanced by the addition of each additive thereto. In addition, it was known therefrom that the composition having a pH value of not lower than 5 are always stable to heat.

**Table 3**

| Additive | pH | Heat of Fusion (J/g) | Melting Point (°C) | Water Content (%) |
|---|---|---|---|---|
| None | 5.28 | 258.7 | 110.1 | 2.53 |
| None (before heating) | | 336.1 | 116.3 | 0.18 |
| (Dried Product) | | | | |
| Okayama SPF | 4.86 | 303.5 | 114.0 | 0.98 |
| Ohita SPF | 4.29 | 288.8 | 112.9 | 1.33 |
| Akita SPF | 4.40 | 284.2 | 112.5 | 2.24 |
| (Calcined Product) | | | | |
| Okayama #200 | 6.19 | 313.8 | 113.7 | 0.57 |
| Ohita Sparkle Flow | 7.35 | 308.7 | 114.7 | 0.58 |
| Akita Fine Flow | 6.12 | 316.5 | 115.0 | 0.47 |
| (Calcined Product of Flux) | | | | |
| Ohita F(T) | 6.93 | 313.3 | 113.4 | 0.51 |
| Ohita #700 | 6.87 | 315.9 | 114.0 | 0.44 |
| Akita F(A) | 6.93 | 303.9 | 115.9 | 0.41 |
| Akita #2000 | 6.40 | 305.6 | 114.1 | 0.47 |
| Silica Flour | 8.13 | 317.0 | 116.2 | 0.46 |
| Silton | 5.20 | 309.9 | 112.6 | 1.64 |
| Fly Ash | 9.30 | 301.0 | 114.6 | 0.54 |
| Kanuma Clay | 7.21 | 308.7 | 112.2 | 1.00 |
| Silica 600H | 6.52 | 308.5 | 114.2 | 1.12 |
| Radiolite #2000 | 6.18 | 325.1 | 116.1 | 1.08 |
| Zeolite | 10.40 | 316.7 | 114.4 | 0.56 |

### Example 4:

A silicic acid compound, "Zeolite" (product of Tosoh Corp.), "Radiolite #2000" (product of Showa Chemical Industry Co.), "Silica Flour" (product of Showa Chemical Industry Co.) or "Kanuma Clay" (product of Maruyoshi Co.) was added to erythritol at a proportion of from 0.01 to 10%. Using the apparatus shown in Fig. 1, the resulting composition was kept at a settled temperature of 160 °C in air (in the presence of oxygen) for 10 days, whereupon the heat of fusion of the composition, the melting point thereof and the water content thereof were measured. From these data thus measured, the heat stability of erythritol in each composition was evaluated.

The results are shown in Table 4 below. As is obvious from the data in the table, the heat stability of erythritol was enhanced by the addition of each additive thereto. In particular, the heat of fusion of each composition was the highest when the proportion of the additive added thereto was from 0.1 to 0.5%.

**Table 4**

| Additive | Proportion of Additive (%) | Heat of Fusion (J/g) | Melting Point (°C) | Water Content (%) |
|---|---|---|---|---|
| None | 0 | 283.9 | 110.3 | 2.51 |
| Kanuma Clay | 0.001 | 301.0 | 115.3 | 1.31 |
| | 0.005 | 300.0 | 114.1 | 1.00 |
| | 0.01 | 304.4 | 113.5 | 1.14 |
| | 0.1 | 309.8 | 113.5 | 0.81 |
| | 0.5 | 319.9 | 115.5 | 1.06 |
| | 1.0 | 314.2 | 115.6 | 0.69 |
| | 5.0 | 303.4 | 111.9 | 2.20 |
| | 10.0 | 292.6 | 112.8 | 2.45 |
| Zeolite | 0.001 | 308.1 | 117.0 | 0.64 |
| | 0.005 | 303.0 | 117.0 | 1.01 |
| | 0.01 | 315.9 | 115.7 | 0.35 |
| | 0.1 | 319.0 | 115.2 | 0.38 |
| | 0.5 | 308.3 | 116.2 | 0.40 |
| | 1.0 | 310.4 | 117.1 | 0.26 |
| | 5.0 | 296.6 | 110.4 | 0.81 |
| | 10.0 | 264.4 | 111.7 | 1.35 |
| Radiolite #2000 | 0.001 | 296.1 | 115.1 | 1.23 |
| | 0.005 | 301.1 | 114.2 | 1.07 |
| | 0.01 | 306.1 | 114.0 | 0.87 |
| | 0.1 | 319.4 | 116.7 | 0.65 |
| | 0.5 | 325.5 | 117.2 | 0.51 |
| | 1.0 | 314.8 | 114.5 | 0.29 |
| | 5.0 | 310.4 | 116.9 | 0.48 |
| | 10.0 | 308.4 | 116.4 | 0.72 |
| Silica Flour | 0.1 | 313.1 | 116.2 | 0.81 |
| | 0.5 | 323.5 | 116.7 | 0.48 |
| | 1.0 | 317.1 | 114.2 | 0.46 |
| | 5.0 | 322.5 | 116.5 | 0.51 |
| | 10.0 | 315.0 | 116.5 | 0.63 |

### Example 5:

An additive or additive mixture was added to erythritol. Using the apparatus shown in Fig. 1, the resulting composition was kept at a settled temperature of 160°C in air (in the presence of oxygen) for 10 days, whereupon the heat of fusion of the composition, the melting point thereof and the water content thereof were measured. From these data thus measured, the heat stability of erythritol in each composition was evaluated. The composition prepared and evaluated herein and the results obtained herein are shown in Table 5.

**Table 5**

| Additive | Proportion of Additive (%) | Heat of Fusion (J/g) | Melting Point (°C) | Water Content (%) |
|---|---|---|---|---|
| None | 0 | 283.9 | 110.3 | 2.51 |
| Fly Ash | 1.0 | 319.7 | 116.0 | 0.52 |
| Fly Ash + | 1.0 | 313.2 | 116.0 | 0.24 |
| Paraffin | 1.0 | | | |

### Example 6:

An inorganic compound was added to erythritol at a proportion of 1% to erythritol. Using the apparatus shown in Fig. 1. the resulting composition was kept at a settled temperature of 160°C in air (in the presence of oxygen) for 10 days, whereupon the heat of fusion of the composition, the melting point thereof and the water content thereof were measured. From these data thus measured, the heat stability of erythritol in each composition was evaluated.

The results are shown in Table 6. Of the additives, hydroxides and carbonates of calcium ion, magnesium ion, zinc ion and aluminium ion exhibited the effect of enhancing the heat stability of erythritol.

**Table 6**

| Additive | pH | Heat of Fusion (J/g) | Water Content (%) |
|---|---|---|---|
| None | 5.87 | 305.7 | 0.96 |
| Sodium Hydroxide | 10.16 | 247.2 | 0.67 |
| Potassium Hydroxide | 10.10 | 227.9 | 1.06 |
| Calcium Hydroxide | 9.11 | 316.5 | 0.32 |
| Zinc Hydroxide | 6.62 | 310.1 | 0.56 |
| Aluminium Hydroxide | 5.82 | 313.8 | 0.63 |
| Zirconium Hydroxide | 5.26 | 270.0 | 5.11 |
| Cupric Hydroxide | 5.38 | Greatly deteriorated | 3.87 |
| Magnesium Hydroxide | 10.08 | 320.4 | 0.57 |
| Lead Hydroxide | 6.60 | 288.1 | 1.69 |
| Potassium Hydrogen-carbonate | 5.66 | Greatly deteriorated | 11.14 |
| Sodium Hydrogen-carbonate | 9.30 | Greatly deteriorated | 13.49 |
| Calcium Carbonate | 6.36 | 323.0 | 0.78 |
| Sodium Carbonate | 9.66 | Greatly deteriorated | 13.20 |
| Potassium Carbonate | 9.44 | Greatly deteriorated | 13.49 |
| Dipotassium Hydrogen-phosphate | 7.05 | 293.1 | 0.86 |
| Disodium Hydrogen-phosphate | 6.84 | 285.7 | 0.99 |

### Example 7:

An inorganic compound was added to erythritol at a proportion of from 0.001 to 1% to erythritol. Using the apparatus shown in Fig. 1, the resulting composition was kept at a settled temperature of 160°C in air (in the presence of oxygen) for 10 days, whereupon the heat of fusion of the composition, the melting point thereof and the water content thereof were measured. From these data thus measured, the heat stability of erythritol in each composition was evaluated.

The results are shown in Table 7. All the additives exhibited the effect of enhancing the heat stability of erythritol.

**Table 7**

| Additive | Proportion of Additive (%) | pH | Heat of Fusion (J/g) | Water Content (%) |
|---|---|---|---|---|
| None | 0 | 5.49 | 297.8 | 1.58 |
| Calcium | 0.001 | 5.93 | 320.9 | 0.69 |
| Hydroxide | 0.005 | 5.81 | 333.9 | 0.58 |
| | 1.0 | 9.11 | 316.5 | 0.32 |
| Zinc Hydroxide | 1.0 | 6.62 | 310.1 | 0.56 |
| Aluminium | 0.001 | 5.59 | 311.4 | 1.37 |
| Hydroxide | 0.005 | 5.64 | 324.2 | 1.01 |
| | 1.0 | 5.82 | 313.8 | 0.63 |
| Magnesium | 1.0 | 10.08 | 320.4 | 0.57 |
| Hydroxide | | | | |
| Calcium Carbonate | 1.0 | 6.36 | 323.0 | 0.78 |

### Example 8:

Five g of erythritol and 1.0%. based on erythritol, of an additive, zinc hydroxide or magnesium hydroxide were put into a Teflon test tube having a diameter of 13 mm, which was then sealed with a silicone stopper.

Using a heating device equipped with a heater and a temperature controller, in which had been set a heat-insulating container having therein an aluminium block having a through-hole through which the Teflon test tube might be inserted, the erythritol-containing composition that had been prepared in the Teflon test tube as above was subjected to a durability test. The conditions for the test were such that the composition was subjected to 720 melting/cooling cycles, one cycle being to heat the composition at 140°C for 45 minutes (this is sufficient for completely melting erythritol) and then to cool it for 135 minutes (this is sufficient for completely solidifying the erythritol melt). As a control sample, erythritol only to which no additive had been added was subjected to the same test.

The results are shown in Table 8, from which it is known that erythritol to which no additive had been added was obviously deteriorated after 720 cycles as compared with that before the test (0 cycle), whilst erythritol to which had been added zinc hydroxide or magnesium hydroxide was not almost deteriorated even after 720 cycles.

These results verified that zinc hydroxide or magnesium hydroxide added to erythritol is effective for preventing erythritol from being deteriorated when erythritol is used as a heat storage substance for a long period of time.

**Table 8**

| Additive | Number of Cycles | Proportion of Additive (%) | Heat of Fusion (J/g) | Melting Point (°C) | Water Content (%) |
|---|---|---|---|---|---|
| None | 0 | 0 | 342.9 | 120.7 | 0.02 |
| | 720 | 0 | 294.6 | 115.6 | 1.11 |
| Zinc | 0 | 1.0 | 343.5 | 120.7 | 0.02 |
| Hydroxide | 720 | 1.0 | 345.6 | 120.9 | 0.02 |
| Magnesium | 0 | 1.0 | 342.3 | 120.8 | 0.03 |
| Hydroxide | 720 | 1.0 | 334.9 | 120.6 | 0.06 |

## Claims

1. A heat storage composition consisting essentially of erythritol and containing a silicic acid compound and/or a di-valent or tri-valent inorganic compound.

2. The heat storage composition as claimed in claim 1, wherein the silicic acid compound comprises amorphous silica and/or an aluminosilicate.

3. The heat storage composition as claimed in claim 1 or 2, wherein the amount of the silicic acid compound is from 0.0005% to 10%.

4. The heat storage composition as claimed in any of claims to 3, wherein the di-valent or tri-valent inorganic compound comprises any of hydroxides, oxides and carbonates of calcium ion, magnesium ion, zinc ion and aluminium ion.

5. The heat storage composition as claimed in claim 4, wherein the di-valent or tri-valent inorganic compound comprises at least one selected from the group consisting of calcium hydroxide, quick lime, magnesium hydroxide, zinc hydroxide, aluminium hydroxide and calcium carbonate.

6. The heat storage composition as claimed in any one of claims 1 to 5, wherein the amount of the di-valent or tri-valent inorganic compound is from 0.0005% to 10%.

7. The heat storage composition as claimed in any of claims 1 to 6, which further contains an erythritol-phobic substance.

8. The heat storage composition as claimed in claim 7, wherein the erythritol-phobic substance comprises at least one selected from the group consisting of paraffin, machine oil, vitamin E, linoleic acid and silicone oil.
